# FASCICULE DE BREVET EUROPEEN

(11) **EP 0 486 373 B1**
(45) Date de publication et mention de la délivrance du brevet: **02.03.1994**
(21) Numéro de dépôt: 91403007.7
(22) Date de dépôt: 08.11.1991
(51) Int. Cl.: A01K 7/06

(54) **Abreuvoir pour le bétail**
Viehtränke
Drinker for cattle

(30) Priorité: 12.11.1990 FR 9013979
(43) Date de publication de la demande: 20.05.1992
(73) Titulaire: LA BUVETTE, F-08800 Montherme (FR)
(72) Inventeur: Gustin, Jean-Pierre, F-08000 Charleville Mézières (FR)
(74) Mandataire: Loyer, Bertrand

(56) Documents cités:
- DE-A- 3 721 467
- US-A- 3 043 267

## Description

La présente invention concerne d'une manière générale un abreuvoir pour le bétail destiné à être installé dans une étable aussi bien qu'à l'extérieur dans un pré.

De manière connue en soi, de tels abreuvoirs sont composés d'un bol de forme globalement demi-sphérique monté contre une paroi ou sur un piquet par des moyens prévus à cet effet sur la face arrière dépassant vers le haut dudit bol.

Une robinetterie est également prévue, qui s'étend globalement verticalement dans le bol et qui présente une tubulure conçue de manière telle que le clapet d'arrivée d'eau qu'elle comporte soit soulevé de son siège lorsqu'un animal pousse l'extrémité de la tubulure pour l'écarter de sa position de repos.

Il est connu de proposer dans ladite tubulure un dispositif tel que l'on puisse démonter aisément celle-ci avec un clapet qu'elle contient sans avoir à interrompre l'alimentation en eau de l'abreuvoir. Grâce à ce dispositif, les interventions pour l'entretien de la tubulure et le nettoyage du clapet en cas de fuite peuvent être faites de manière très rapide et il n'est pas nécessaire de prévoir des robinets de coupure d'eau pour chaque abreuvoir.

Par contre, il n'a jamais été prévu de pouvoir démonter tout l'ensemble de robinetterie de manière aisée. Ledit ensemble de robinetterie est généralement solidaire d'un coude lié au bol dont le démontage nécessite le plus souvent la dépose complète de l'abreuvoir.

La présente invention tend alors à proposer un abreuvoir d'un type nouveau dans lequel on peut démonter très rapidement toute la robinetterie afin d'avoir accès à la canalisation d'arrivée d'eau.

A cet effet, la présente invention concerne un abreuvoir pour le bétail du genre comportant une robinetterie s'étendant au-dessus d'un bol en étant disposée le long de la face arrière de celui-ci et un coude auquel est fixée la canalisation d'arrivée d'eau, caractérisé en ce que :
- un orifice est prévu dans la face arrière à travers lequel est disposée l'extrémité du coude ;
- la robinetterie est positionnée sur ladite extrémité du coude ,
- une vis assure la solidarisation du coude, de la face arrière et de la robinetterie ainsi que le passage de l'eau arrivant par ledit coude en direction de la sortie de la robinetterie.

L'invention sera mieux comprise par la description qui va suivre en liaison au dessin dans lequel:
La figure 1 est une vue en perspective d'un abreuvoir selon l'invention ;
La figure 2 est une vue en coupe suivant un plan vertical médian de l'abreuvoir de la figure 1.

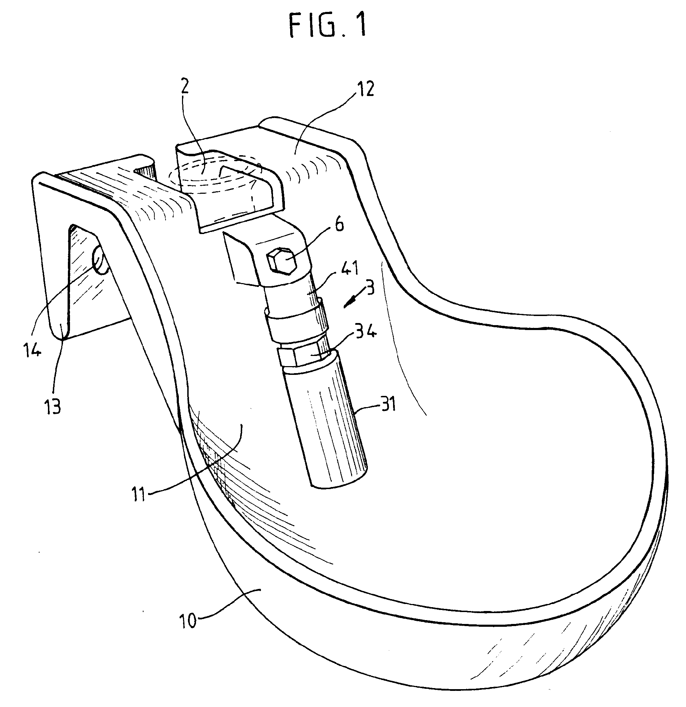

Sur la figure 1, on reconnait le bol 10 d'un abreuvoir le long de la face arrière 11 duquel s'étend la robinetterie 3 nécessaire à l'approvisionnement en eau.

Dans l'exemple représenté, la face arrière 11 remonte largement au-dessus du bol 10 pour présenter une portion plane 12 qui se termine par un retour vertical 13.

Le retour vertical 13, dirigé vers le bas dans l'exemple représenté, est traversé par des orifices 14 permettant la mise en place de moyens de fixation de l'abreuvoir à une paroi ou un piquet.

La canalisation d'arrivée d'eau n'a pas été représentée sur les figures, seul le coude 2 auquel elle est solidarisée est figuré.

Bien entendu la canalisation peut indifféremment arriver par le dessus, comme représenté, à travers une ouverture de la portion plane 12 ou par le dessous de l'abreuvoir.

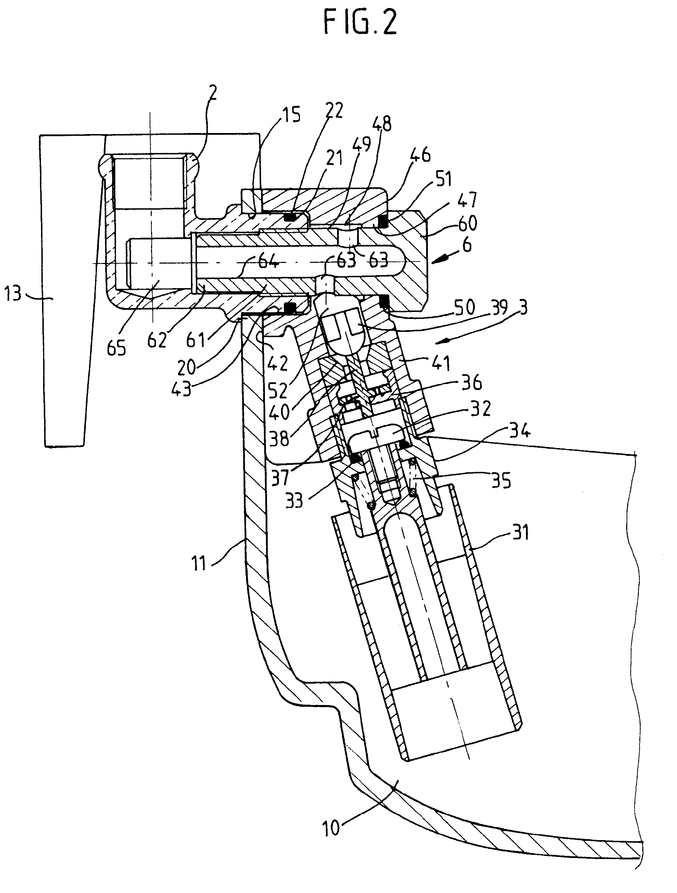

Comme on le voit sur la figure 2, le coude 2 situé à l'extrémité de la canalisation d'arrivée d'eau traverse selon l'invention un orifice 15 de la face arrière 11 de l'abreuvoir.

Le coude 2 présente un épaulement périphérique 20 limitant son enfoncement à travers l'orifice 15.

L'extrémité du coude 2 destinée à dépasser de la face arrière 11 au-dessus du bol 10 comporte une rainure circonférentielle 21 pour la mise en place d'un joint 22. De manière usuelle, le coude 2 est taraudé intérieurement pour sa solidarisation par vissage aux éléments qu'il relie.

La robinetterie 3 comporte de manière connue en soi une tubulure 31 déplaçable par l'animal lorsqu'il veut boire.

Cette tubulure 31 porte à son extrémité située à l'intérieur de la robinetterie un clapet 32 reposant, en position de repos de la tubulure représentée sur la figure, sur un siège 33 solidaire d'un embout démontable 34.

La tubulure 31 est déplaçable par rapport audit embout 34 à l'encontre d'un ressort 35.

Ainsi, lorsqu'un animal appuie sur la tubulure 31, celle-ci entraîne le clapet 32 qui est décollé de son siège 33 ce qui autorise le passage de l'eau vers le bol 10 et, dès que l'animal cesse son action sur ladite tubulure 31, celle-ci est ramenée dans sa position par le ressort 35 ce qui repose le clapet 32 sur son siège et coupe l'alimentation en eau.

L'embout démontable 34 porte un gicleur formé d'une cage 36 à l'intérieur de laquelle est positionné un barillet 37 dont la tige de manoeuvre 38 repousse constamment un obturateur 39 hors de son siège 40.

La cage 36 comporte des orifices de dimensions différentes, tandis que le barillet comporte une seule ouverture afin que l'on puisse régler le débit de la robinetterie en positionnant ladite ouverture devant l'orifice de dimension voulue. Cette disposition est connue en soi et n'a pas été représentée en détail.

L'obturateur 39 et son siège 40 font partie d'un corps de robinetterie 41 à l'extrémité inférieure duquel est vissé l'embout démontable 34.

Une telle disposition est connue en soi et largement utilisée pour les abreuvoirs car elle permet, en démontant l'embout 34 dont la surface externe est à cet effet conformée en écrou à six pans, d'avoir accès de manière aisée au gicleur et au clapet pour leur réglage en entretien. Lors du démontage de l'embout, la tige de manoeuvre 38 du barillet 37 sort du corps de robinetterie 41 et laisse alors l'obturateur 39 se positionner sur son siège 40 ce qui assure la fermeture de l'alimentation en eau de manière très simple.

De manière habituelle, le corps de robinetterie 41 forme une seule pièce avec le coude 2 d'arrivée d'eau, il est alors difficile d'avoir accès à la canalisation sans démonter l'abreuvoir de son support.

Suivant l'invention, le corps de robinetterie 41 est conformé avec une face plane 42 destinée à être positionnée contre la face arrière 11 de l'abreuvoir du côté du bol 10. Cette face plane 42 est traversée par un alésage 43 de diamètre légèrement supérieur au diamètre de l'extrémité du coude 2 qui dépasse de la face arrière 11 au-dessus du bol 10.

L'alésage 43 se prolonge afin de traverser la partie supérieure du corps de robinetterie pour déboucher dans une seconde face plane 46 parallèle à la face 42.

Cet alésage traversant est étayé afin d'être à sa partie 47 débouchant dans ladite face 46 de diamètre égal au diamètre de la portion filetée du coude 2.

Un lamage 50 entoure l'alésage 47 pour la mise en place d'un joint d'étanchéité 51.

Entre les portions d'extrémité 43, 47, l'alésage traversant présente une portion intermédiaire 48 de diamètre supérieur à la portion 47.

Le corps de robinetterie 41 présente un second alésage 52 formant un angle généralement supérieur à 90° avec l'alésage 43 proche de la face arrière 11 de l'abreuvoir.

C'est dans cet alésage 52 qu'est positionné l'obturateur 39. Le dispositif précédemment décrit comportant l'embout démontable 34 et la tubulure 31 est disposé dans l'axe de cet alésage 52.

Le coude 2 étant positionné à travers l'orifice -15 de la face arrière 11, la robinetterie 3 est disposée sur celui-ci en enfilant le corps de robinetterie 41 par l'alésage 43 sur l'extrémité dépassante du coude jusqu'à ce que la face plane 42 soit en contact avec la face arrière 11.

Les deux pièces ainsi positionnées sont rendues solidaires selon l'invention, par une vis 6 que l'on introduit par la face plane 46 du corps de robinetterie 41 située au-dessus du bol 10.

Cette vis 6 comporte une tête 60 et un corps en deux portions 61, 62. La portion 61 est de longueur telle que son extrémité filetée vienne coopérer avec l'extrémité taraudée du coude 2 et est terminée par un prolongement 62 de diamètre tel qu'il s'engage dans l'alésage interne du coude.

Lorsque l'on visse la vis 6 dans l'extrémité taraudée du coude, on assure la solidarisation du coude et de la robinetterie 3 avec pincement de la face arrière 11 de l'abreuvoir. Les joints 22, 51 assurent l'étanchéité de ce montage.

Le corps de la vis est traversé par un alésage axial 64 dans lequel peut circuler l'eau arrivant de la canalisation à travers le coude 2.

La portion 61 de la vis est au contact de la face interne de la portion d'extrémité 47 de l'alésage traversant le corps de robinetterie, tandis qu'une chambre 49 circonférentielle est formée entre ladite portion 61 et la portion intermédiaire 48 de l'alésage.

Des passages radiaux 63 traversent le corps de la vis 6 afin de mettre en relation ladite chambre 49 et l'alésage 64 de ladite vis.

Par une telle disposition, l'eau en provenance de la canalisation s'écoule dans le coude 2, l'alésage axial 64 puis traverse les passages 63 pour entrer dans la chambre 49 en direction de l'alésage 52 et donc de la tubulure 31.

Comme on aura pu le constater, le fait de prévoir suivant l'invention la mise en oeuvre d'une vis 6 qui assure à la fois la solidarisation du coude 2 d'arrivée d'eau, de l'abreuvoir et de la robinetterie 3 et le passage de l'eau permet en cas de problème de démonter aisément ladite robinetterie 3 en enlevant simplement la vis 6. On a ainsi accès très facilement à la canalisation d'arrivée d'eau sans avoir à démonter l'abreuvoir de son support.

Un autre avantage de cette disposition tient au fait que l'on peut prévoir à l'extrémité de ladite vis 6 un filtre 65 afin d'éviter que des impuretés pénètrent dans la robinetterie 3.

## Revendications

1. Abreuvoir pour le bétail du genre comportant une robinetterie (3) s'étendant au-dessus d'un bol (10) en étant disposée le long de la face arrière (11) de celui-ci, et un coude (2) auquel est fixée la canalisation d'arrivée d'eau, caractérisé en ce que :
- un orifice (15) est prévu dans la face arrière (11) à travers lequel est disposée l'extrémité du coude (2);
- la robinetterie (3) est positionnée sur ladite extrémité du coude (2) ,
- une vis (6) assure la solidarisation du coude (2), de la face arrière (11) et de la robinetterie (3) ainsi que le passage de l'eau arrivant par ledit coude (2) en direction de la sortie de la robinetterie (3).

2. Abreuvoir selon la revendication 1, caractérisé en ce que la robinetterie (3) s'applique par une première face plane (42) du corps de robinetterie (41) contre la face arrière (11) en étant enfilée sur l'extrémité du coude (2) par un alésage (43).

3. Abreuvoir selon la revendication 2, caractérisé en ce que le corps de robinetterie (41) présente une seconde face plane (46) parallèle à ladite première face plane (42) et en ce que l'alésage (43) se prolonge afin de déboucher dans ladite seconde face plane (46) par une portion d'extrémité (47) de diamètre égal au diamètre de la portion filetée du coude (2).

4. Abreuvoir selon la revendication 3, caractérisé en ce que la portion intermédiaire (48) située entre l'alésage (43) et la portion d'extrémité (47) est de diamètre supérieur au diamètre de ladite portion d'extrémité (47).

5. Abreuvoir selon la revendication 4, caractérisé en ce que la vis (6) est enfilée par la portion d'extrémité (47) et présente une tête (60) et un corps (61) de diamètre égal à celui de la portion d'extrémité (47) de l'alésage, dont l'extrémité est filetée afin d'être vissée dans l'extrémité du coude (2) traversant l'orifice (15).

6. Abreuvoir selon la revendication 5, caractérisé en ce que le corps (61) de la vis présente un alésage axial (64) dans lequel circule l'eau provenant du coude (2), ledit alésage axial (64) étant en communication par des passages radiaux (63) avec une chambre (49) formée entre le corps (61) et la portion intermédiaire (48) de l'alésage du corps de robinetterie (41) dans laquelle débouche l'alésage (52) de sortie de la robinetterie (3).

7. Abreuvoir selon la revendication 6, caractérisé en ce que le corps (61) de la vis (6) se termine par un prolongement (62) s'engageant dans le coude (2) et présentant un filtre (65)

## Claims

1. A drinking-trough for livestock of the type having a valve assembly (3) extending above a bowl (10) and disposed along the rear face (11) of the latter, and an elbow (2) to which is fixed the water inlet pipework, characterised in that:
- an orifice (15) is provided in the rear face (11) through which is disposed the end of the elbow (2);
- the valve assembly (3) is located on said end of the elbow (2),
- a screw (6) ensures the rigidity of the elbow (2), of the rear face (11) and of the valve assembly (3), as well as providing for the passage of the water arriving through said elbow (2) in the direction of the outlet from the valve assembly (3).

2. A drinking-trough according to Claim 1, characterised in that the tap (3) is applied by a first flat face (42) of the valve assembly body (41) against the rear face (11), being threaded on the end of the elbow (2) by a bore (43).

3. A drinking-trough according to Claim 2, characterised in that the body (41) of the valve assembly has a second flat face (46) parallel to said first flat face (42) and in that the bore (43) is extended so as to open into said second flat face (46) through an end portion (47) of diameter equal to the diameter of the threaded portion of the elbow (2).

4. A drinking-trough according to Claim 3, characterised in that the intermediate portion (48) located between the bore (43) and the end portion (47) is of greater diameter than said end portion (47)..

5. A drinking-trough according to Claim 4, characterised in that the screw (6) is threadedly engaged by the end portion (47) and has a head (60) and a body (61) of diameter equal to that of the end portion (47) of the bore, of which the end is threaded in order to be screwed into the end of the elbow (2) passing through the orifice (15).

6. A drinking-trough according to Claim 5, characterised in that the body (61) of the screw has an axial bore (64) in which circulates water leaving the elbow (2), said axial bore (64) being in communication through radial passages (63) with a chamber (49) formed between the body (61) and the intermediate portion (48) of the bore of the valve assembly body (41) into which the outlet bore (52) of the tap (3) opens.

7. A drinking-trough according to Claim 6, characterised in that the body (61) of the screw (6) ends in an extension (62) engaging in the elbow (2) and having a filter (65).

## Patentansprüche

1. Tränke für Vieh, mit einer Armatur (3), die sich über einer Schale (10) längs deren hinterer Fläche (11) erstreckt, und mit einem Krümmer (2), an dem die Wasserzuleitung befestigt ist, **dadurch gekennzeichnet,** daß
- eine Öffnung (15) in der hinteren Fläche (11) vorgesehen ist, durch die hindurch das Ende des Krümmers (2) verläuft,
- die Armatur (3) auf besagtem Ende des Krümmers (2) angeordnet ist,
- eine Schraube (6) die feste Verbindung des Krümmers (2), der hinteren Fläche (11) und der Armatur (3) miteinander sowie den Durchfluß des durch den Krümmer (2) ankommenden Wassers in Richtung auf den Auslaß der Armatur (3) sichert.

2. Tränke nach Anspruch 1, dadurch gekennzeichnet, daß sich die Armatur (3) mittels einer ersten ebenen Fläche (42) des Armaturkörpers (41) an die hintere Fläche (11) anlegt und dabei auf das Ende des Krümmers (2) durch eine Bohrung (43) aufgeschoben ist.

3. Tränke nach Anspruch 2, dadurch gekennzeichnet, daß der Armaturkörper (41 ) eine zweite ebene Fläche (46) aufweist, die parallel zur ersten ebenen Fläche (42) verläuft, und daß die Bohrung (43) sich bis zur Einmündung in die zweite ebene Fläche (46) durch einen Endabschnitt (47), dessen Durchmesser gleich dem Durchmesser des mit einem Gewinde versehenen Abschnitts des Krümmers (2) ist, fortsetzt.

4. Tränke nach Anspruch 3, dadurch gekennzeichnet, daß der Zwischenabschnitt (48), der zwischen der Bohrung (43) und dem Endabschnitt (47) liegt, einen Durchmesser aufweist, der größer als der Durchmesser des Endabschnitts (47) ist.

5. Tränke nach Anspruch 4, dadurch gekennzeichnet, daß die Schraube (6) durch den Endabschnitt (47) eingeschoben wird und einen Kopf (60) sowie einen Körper (61) aufweist, dessen Durchmesser gleich dem des Endabschnitts (47) der Bohrung ist und dessen Ende mit einem Gewinde zum Einschrauben in das die Öffnung (15) durchquerende Ende des Krümmers (2) versehen ist.

6. Tränke nach Anspruch 5, dadurch gekennzeichnet, daß der Körper (61) der Schraube eine Axialbohrung (64) aufweist, in der das vom Krümmer (2) kommende Wasser umläuft und die über radiale Durchlässe (63) mit einer Kammer (49) in Verbindung steht, die zwischen dem Körper (61) und dem Zwischenabschnitt (48) der Bohrung des Armaturkörpers (41) ausgebildet ist und in welche die Auslaßbohrung (52) der Armatur (3) mündet.

7. Tränke nach Anspruch 6, dadurch gekennzeichnet, daß der Körper (61) der Schraube (6) mit einem Fortsatz (62) abschließt, der in den Krümmer (2) eingreift und einen Filter (65) aufweist.
